Europäisches Patentamt

European Patent Office

Office européen des brevets

(19)

(11) Publication number: **0 047 615**
**B1**

## (12) EUROPEAN PATENT SPECIFICATION

(45) Date of publication of patent specification: **06.02.85**

(21) Application number: **81303950.0**

(22) Date of filing: **28.08.81**

(51) Int. Cl.⁴: **B 65 G 53/66,** B 65 G 53/24, B 65 G 67/60

(54) **Improvements in or relating to pneumatic transportation systems.**

(30) Priority: **05.09.80 GB 8028702**

(43) Date of publication of application:
**17.03.82 Bulletin 82/11**

(45) Publication of the grant of the patent:
**06.02.85 Bulletin 85/06**

(84) Designated Contracting States:
**BE DE FR NL**

(56) References cited:
**DE-B- 2 229**
**DE-B- 9 369**
**DE-C- 375 147**
**DE-C- 909 430**

(73) Proprietor: **GEC MECHANICAL HANDLING LIMITED**
**Spencer Works**
**Melksham Wiltshire SN12 8AX (GB)**

(72) Inventor: **Smallwood, John Michael Terence**
**21 Napier Road**
**Bath, BA1 4LN Avon (GB)**

(74) Representative: **Kirby, Harold Victor Albert**
**Central Patent Department Wembley Office The General Electric Company, p.l.c. Hirst Research Centre East Lane**
**Wembley Middlesex HA9 7PP (GB)**

Courier Press, Leamington Spa, England.

## Description

This invention relates to pneumatic transportation systems for the bulk transportation of loose solid materials such as cereals, coal or other minerals by carrying the latter along passages entrained in a stream of air. Such systems include vacuum lifting systems which are used for unloading particulate commodities such as grain from ships' holds, or positive pressure systems for charging a flow of gas with powdered material which is drawn from container which is under pressure.

In current practice, when a container such as a ship's hold, is being unloaded pneumatically by a twin boom pipe suction system which has a single common receiver, up to 30% of the useful capacity can be lost due to loss of vacuum in one boom when the other boom is withdrawn from the particulate material. The latter boom under such conditions therefore partially vents the receiver to the atmosphere.

One such transportation system is known from German published application M2 229 (7/12/50) in which each of the boom passages has a pressure detector sensitive to the pressure of the gas stream within that passage and a valve located downstream of the pressure detector in order to control the rate of flow of gas through the passage in response to said detected pressure. However, it has been found that at times transient pressure changes cause the valves to operate, thus limiting the efficiency of the system. Consequently, it is an object of the present invention to provide a pneumatic transportation system in which such substantial loss of capacity and efficiency does not occur.

According to the present invention a pneumatic system for transportation of loose solid materials comprises a suction generator, a plurality of passages extending from a first location or locations from which the material is to be transported, to a second location or locations where the material is to be deposited, said passages being in communication with said suction generator so as to create a gas stream in which the material may be entrained to be carried along the passages to the second location or locations, each passage being provided with a pressure detector sensitive to the pressure of the gas stream within that passage, and each passage also being provided with a valve, located downstream of the pressure detector, effective to control the rate of flow of gas through the passage in response to said respective detected pressure each valve being caused to open whenever said respective detected pressure falls below a predetermined value and partially close whenever the respective detected pressure rises above a predetermined value, characterised in that each valve is also caused to open whenever the respective detected pressure falls at a rate exceeding a certain predetermined value and to partially close whenever the respective detected pressure rises at a rate exceeding a certain predetermined value, and each said detector has a bleed hole communicating with a source of gas outside the respective passage which gas is at a pressure greater than that within the passage at the position of the detector in operation of the suction generator so that the gas is forced or sucked through the pressure detectors in such a manner as to prevent ingress of solid materials from the passages into the detectors, the system further comprising a delay means for delaying the operation of the valves in response to changes in pressure in the respective passages for a time sufficient to ensure that the valves are not affected by transient changes in pressure and that the open valves and preceding passages are cleared of solid material before closure.

The system is preferably arranged so that each valve partially closes in the event that the respective detected pressure rises above a predetermined value and each valve opens in the event that the respective detected pressure falls below a predetermined value. The system is also preferably arranged so that each valve opens if the rate of evacuation of the respective passage exceeds a predetermined value.

Withdrawal of a vacuum passage from the supply of material to be transported does not cause loss of vacuum in the other vacuum passage or passages because partial closure of the respective valve reduces the ingress of air to a level which can be accommodated by the suction generator. Reinsertion of the vacuum passage into the supply of material to be transported causes the pressure therein to fall due to evacuation through the partially closed valve. When the pressure has fallen to a predetermined level the valve is caused to open and full suction is applied to the passage. A system in accordance with this invention may therefore incorporate two or more vacuum passages evacuated economically by a single suction generator, whereas use of a conventional system with more than one vacuum passage, accidental loss of operating capacity would be a frequent occurrence, especially when a large number of vacuum passages are used.

As stated above the actuating system for the valves incorporates a delay means to ensure that the valves are not actuated by transient changes in pressure and to ensure that the open valves and preceeding passages are cleared of solid material before closure.

Since the detectors sensitive to changes in pressure incorporate air bleeds, air therefore flows through the detector into the respective passage preventing ingress of solid materials and consequent blockage of the detector.

The invention will be better understood from the following description with reference to the drawing of an example of a system in accordance with the invention.

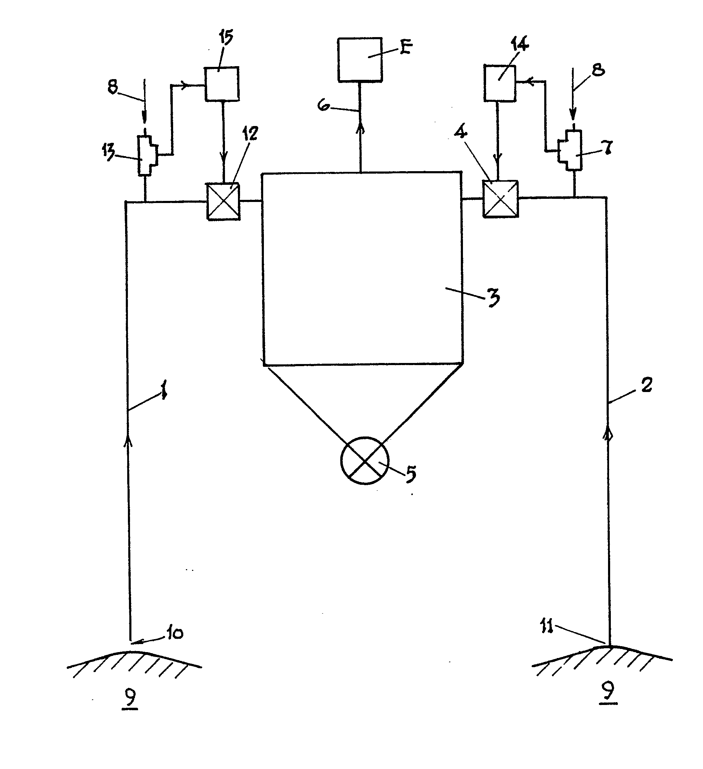

Figure 1 is a schematic illustration of a system in accordance with the invention.

The system shown in Figure 1 is designed for transporting grain and comprises two suction hoses 1, 2 connected to a filter and receiver 3 via automatically controllable valves 4, 12. The receiver may be emptied through an air lock 5 and is evacuated by a vacuum line 6 to an exhauster E. Pressure transducers 7, 13 detect the pressures in the respective hoses 1, 2 and are provided with 3 mm bleed holes 8 open to the atmosphere to cause air to flow inwards into the hoses through the detectors and so prevent their congestion by particles of grain. The supply of grain to be transported is shown at 9. The pressure transducers 7, 13 are connected to control means 14, 15 which control the operation of the respective valves 4, 12.

In use of the system application of a vacuum to 6 causes grain 9 to be drawn into the hoses 1, 2 and deposited in the receiver 3. If one of the hoses is withdrawn from the grain, as shown for example at 10, loss of vacuum throughout the system is prevented by partial closure of the respective valve 12. This is caused by a rise in the pressure detected in the hose 1 by the transducer 13. The valve 4 will be similarly partially closed due to a transducer 7, when the latter is withdrawn from the grain. The presence of air bleeds 8 means that the pressure detected by the transducers 7, 12 is slightly higher than that in the hoses 1, 2. The control means impose preset time delay on the actuation of the respective valves 4, 12, thereby preventing their actuation by transient pressure variations. When a hose is replaced in the grain, as shown at 11, evacuation of the respective hoses 1, 2 through the partially closed valves 4, 12 to a preset minimum pressure causes the valves to open and the full operating vacuum to be applied. The control means 14, 15 can alternatively or additionally be arranged to open the respective valves 4, 12 and apply the full operating vacuum if the pressure detected by the associated transducers 7, 13 decreases at more than a predetermined value and to partially close them whenever the detected pressure rises at a rate exceeding a certain predetermined value.

The valves 4, 12 may be of any convenient kind, operable for example electromagnetically or pneumatically, the control means being selected accordingly. In some cases also the output of the pressure transducers may be such as to control the operation of the valves directly.

**Claims**

1. A pneumatic system for transportation of loose solid materials comprises a suction generator (E), a plurality of passages (1, 2) extending from a first location or locations (9) from which the material is to be transported, to a second location (3) or locations where the material is to be deposited, said passages being in communication with said suction generator so as to create a gas stream in which the material may be entrained to be carried along the passages to the second location or locations, each passage being provided with a pressure detector sensitive to the pressure of the gas stream within that passage, and each passage also being provided with a valve, located downstream of the pressure detector, effective to control the rate of flow of gas through the passage in response to said respective detected pressure, each valve (4, 12) being caused to open whenever said respective detected pressure falls below a predetermined value and partially to close whenever the respective detected pressure rises above a predetermined value, characterised in that each valve is also caused to open whenever the respective detected pressure falls at a rate exceeding a certain predetermined value and to partially close whenever the respective detected pressure rises at a rate exceeding a certain predetermined value, and each said detector has a bleed hole (8) communicating with a source of gas outside the respective passage which gas is at a pressure greater than that within the passage at the position of the detector in operation of the suction generator so that the gas is forced or sucked through the pressure detectors in such a manner as to prevent ingress of solid materials from the passages into the detectors, the system further comprising a delay means (14, 15) for delaying the operation of the valves in response to changes in pressure in the respective passages for a time sufficient to ensure that the valves are not affected by transient changes in pressure and that the open valves and preceding passages are cleared of solid material before closure.

2. A grain-handling system incorporating a pneumatic system as claimed in Claim 1.

**Patentansprüche**

1. Pneumatisches Fördersystem für festes Schüttgut mit einem Sauggenerator (G), mehreren Durchlaßkanälen (1, 2) die sich von einer ersten Stelle oder ersten Stellen (9), von denen das Material zu befördern ist, zu einer zweiten Stelle (3) oder Stellen erstrecken, wo das Material abzulagern ist, wobei die Durchlaßkanäle in Verbindung mit dem Sauggenerator stehen, so daß ein Gasstrom entsteht, in dem das Material mitgerissen und entlang den Durchlaßkanälen zu der zweiten Stelle oder den zweiten Stellen transportiert werden kann, wobei jeder Durchlaßkanal einen Druckdetektor, der für den Druck des Gasstromes in den Durchlaßkanal empfindlich ist, und ein Absperrorgan aufweist, das in Strömungsrichtung unterhalb des Druckdetektors angeordnet ist und die Durchflußmenge des Gases durch den Durchlaßkanal entsprechend des jeweils erfaßten Drucks steuert, wobei jedes Absperrorgan (4, 12) geöffnet wird, wenn der jeweils erfaßte Druck unter einen vorbestimmten Wert fällt, und teilweise geschlossen wird, wenn der jeweils erfaßte Druck über einen vorbestimmten Wert ansteigt, dadurch gekennzeichnet, daß jedes Absperrorgan auch dann geöffnet wird, wenn der jeweils erfaßte Druck in einem Maße fällt, das einen gewissen vorbestimmten Wert übersteigt, und teilweise geschlossen wird, wenn der jeweils erfaßte Druck in einem Maße ansteigt, das einen gewissen vorbestimmten Wert übersteigt, daß jeder Detektor eine kleine Luftöffnung (8) hat, die mit einer außerhalb des jeweiligen Durchlaßkanals gelegenen Gasquelle in Verbindung steht, deren Gas einen Druck hat, der grösser als derjenige innerhalb des Durchlaßkanales an der Stelle des Detektors bei Betrieb des Sauggenerators ist, so daß das Gas in solcher Weise durch den Druckdetektor gezwängt oder eingesaugt wird, daß das Eindringen von festen Materialien von den Durchlaßkanälen in die Detektoren verhindert ist, wobei das System ferner eine Verzögerungseinrichtung (14, 15) zur Verzögerung der Betätigung der Absperrorgane entsprechend den Druckänderungen in den jeweiligen Durchlaßkanälen für eine Zeitspanne aufweist, die ausricht, um sicherzustellen, daß die Absperrorgane nicht von vorübergehenden Druckänderungen beeinflußt werden und daß die offenen Absperrorgane und davorliegenden Durchlaßkanäle von dem festen Material vor dem Verschluß befreit werden.

2. Getreideverladesystem mit einem pneumatischen Fördersystem nach Anspruch 1.

**Revendications**

1. Système pneumatique de transport de matières solides fluides, qui comprend un générateur d'aspiration (E), plusieurs passages (1, 2) partant d'un ou plusieurs emplacements (9) à partir desquels la matière doit être transportée, et rejoignant un ou plusieurs seconds emplacements (3) auxquels la matière doit être déposée, lesdits passages communiquant avec le générateur d'aspiration de manière qu'un courant de gaz dans lequel la matière peut être entraînée afin qu'elle soit transportée le long des passages vers les seconds emplacement soit formé, chaque passage ayant un détecteur de pression sensible à la pression du courant gazeux dans ce passage, et chaque passage ayant aussi une soupape placée en aval du détecteur de pression et assurant le réglage du débit de gaz par le passage en fonction de la pression respective détectée, chaque soupape (4, 12) étant destinée à s'ouvrir chaque fois que la pression détectée respective tombe au-dessous d'une valeur prédéterminée et à se fermer en partie chaque fois que la pression respective détectée s'élève au-dessus d'une valeur prédéterminée, caractérisé en ce que chaque soupape est aussi destinée à s'ouvrir chaque fois que la pression respective détectée tombe à une vitesse dépassant une certaine valeur prédéterminée et se ferme en partie chaque fois que la pression détectée respective s'élève à une vitesse dépassant une certaine valeur prédéterminée, et chaque détecteur a un trou de purge (8) communiquant avec une source de gaz externe au passage respectif, ce gaz étant à une pression supérieure à celle qui règne dans le passage dans la position du détecteur lors du fonctionnement du générateur d'aspiration, si bien que le gaz est introduit à force dans les détecteurs de pression ou aspiré par l'intermédiaire de ceux-ci d'une manière qui empêche la pénétration des matières solides des passages dans les détecteurs, le système comprenant en outre un dispositif à retard (14, 15) destiné à retarder la manoeuvre des soupapes à la suite des changements de pression dans les passages respectifs pendant un temps suffisant pour que les soupapes ne soient pas affectées par les variations transitoires de pression et pour que les soupapes ouvertes et les passages qui les précèdent soient débarrassés de matière solide avant fermeture.

2. Système de manutention de grain, comprenant un système pneumatique selon la revendication 1.